# EUROPÄISCHE PATENTSCHRIFT

(11) **EP 0 634 433 B1**
(45) Veröffentlichungstag und Bekanntmachung des Hinweises auf die Patenterteilung: **17.12.1997**
(21) Anmeldenummer: 94110077.8
(22) Anmeldetag: 29.06.1994
(51) Int. Cl.: C08G 18/42, C08L 97/02

(54) **Verwendung von Mischungen als Bindemittel zur Herstellung von Verbundmaterialien**
Use of mixtures as a binder for the preparation of composite materials
Utilisation de mélanges comme liant pour la préparation de matériaux composites

(30) Priorität: 12.07.1993 DE 4323231; 11.01.1994 DE 4400465
(43) Veröffentlichungstag der Anmeldung: 18.01.1995
(73) Patentinhaber: BAYER AG, 51368 Leverkusen (DE)
(72) Erfinder: Schmidt, Manfred, Dr., D-41540 Dormagen (DE); Vehlewald, Peter, Dr., D-42799 Leichlingen (DE); Kasperek, Peter, D-53804 Much (DE); Kapps, Manfred, Dr., D-51467 Bergisch-Gladbach (DE); König, Klaus, Dr., D-51519 Odenthal (DE)

(56) Entgegenhaltungen:
- EP-A- 0 478 216
- EP-A- 0 513 964
- DE-A- 4 114 022

## Beschreibung

Verbundmaterialien (Preßwerkstoffe) wie Spanplatten, Verbundplatten oder andere Formkörper werden z.B. so hergestellt, daß man das anorganische oder organische Rohmaterial, z.B. eine Masse aus Holzschnitzeln, Holzfasern oder anderem Lignocellulose enthaltenden Material, mit Bindemitteln, z.B. wäßrigen Dispersionen von Harnstoff/Formaldehyd- oder Phenol/Formaldehyd-Harzen, heiß verpreßt. Es ist auch bekannt, als Bindemittel für Preßplatten anstelle von Formaldehydharzen Isocyanate bzw. Isocyanatlösungen zu verwenden (DE-AS 1 271 984; DE-OS 1 492 507; DE-OS 1 653 177; DE-OS 2 109 686). Die Verwendung von Polyisocyanaten als Bindemittel verbessert die Stabilität und das Feuchteverhalten der Verbundmaterialien und erhöht deren mechanische Festigkeiten. Darüber hinaus besitzen Polyisocyanate als Bindemittel, wie es die DE-OS 2 109 686 offenbart, weitreichende verfahrenstechnische Vorteile.

Die großindustrielle Herstellung von mit Polyisocyanaten gebundenen Materialien, insbesondere lignocellulosehaltigen Werkstoffen, wie z.B. Spanplatten, Faserplatten oder Sperrholz, wird jedoch durch die hohe Klebkraft der Polyisocyanate beeinträchtigt, welche dazu führt, daß die Formkörper nach der Heißverpressung an allen Metallteilen, insbesondere den Preßblechen aus Stahl oder Aluminium, stark haften und somit die Entformung erschweren.

Die bisher vorgeschlagenen Verfahren, dieses Trennproblem zu lösen, sind mit mehr oder minder großen Nachteilen behaftet; so weisen speziell für Isocyanate entwickelte Trennmittel häufig zwar eine gute Trennwirkung auf, sind aber bei großtechnischer Anwendung nicht sicher genug, unwirtschaftlich und können außerdem bei der Weiterverarbeitung der Platten Fehlverleimungen oder Beschichtungsschwierigkeiten bewirken.

In der DE-OS 1 653 178 wird vorgeschlagen, bei der Herstellung von Platten oder Formkörpern durch Heißverpressen von Gemischen aus lignocellulosehaltigen Materialien und Polyisocyanaten die Preßbleche oder Preßformen vor dem Pressen mit Polyhydroxylverbindungen wie z.B. Glycerin, Ethylenglykol oder Polyester- bzw. Polyetherpolyolen zu behandeln. Nachteilig ist dabei, daß für das Aufbringen dieses Trennmittels ein eigener Arbeitsgang erforderlich ist und darüber hinaus ein Teil des Polyisocyanates durch Reaktion mit dem Trennmittel verbraucht wird.

Eine andere Möglichkeit, das Trennverhalten der Formkörper zu verbesssern, besteht gemäß DE-OS 2 325 926 darin, als Trennmittel solche Verbindungen zu verwenden, welche bei Isocyanaten eine Isocyanuratbildung katalysieren. Ein Nachteil dieser Arbeitsweise ist jedoch darin zu sehen, daß die Katalysatoren im Isocyanat destabilisierend wirken und somit die Herstellung eines spezifikationsgerechten Isocyanat-Bindemittels verhindern.

Der Erfindung liegt die Aufgabe zugrunde, die oben beschriebenen Nachteile bei der Verbundmaterialien-Herstellung mit Polyisocyanaten zu vermeiden und lagerfähige Mischungen auf Isocyanatbasis zur Verfügung zu stellen, welche als Bindemittel zur Herstellung von Verbundkörpern eine einwandfreie Entformbarkeit der Verbundkörper gewährleisten. Überraschenderweise wurde gefunden, daß diese Aufgabe gelöst werden kann, wenn man ein aromatisches Polyisocyanat in Kombination mit einen Polyester, welcher durch Selbstkondensation von Ricinolsäure, gegebenenfalls unter Verwendung eines speziellen Starterdiols erhalten wird, einsetzt.

Gegenstand der Erfindung ist die Verwendung einer Mischung, enthaltend
a) ein aromatisches Polyisocyanat,
b) einen Polyester mit einem mittleren Molekulargewicht von 600-5000, erhältlich durch Selbstkondensation von Ricinolsäure gegebenenfalls unter Mitverwendung eines C₂-C₂₀-Starterpolyols, und gegebenenfalls
c) Zusatzstoffe,
gegebenenfalls in Kombination mit an sich bekannten Polyhydroxylverbindungen vom Molekulargewicht 400 bis 10000, als Bindemittel zur Herstellung von Verbundmaterialien.

Erfindungsgemäß bevorzugt ist, daß
- das Polyisocyanat a) ein Polyisocyanat auf Basis von Diphenylmethan-diisocyanat ist,
- das Polyisocyanat a) ein Gemisch von Diphenylmethan-diisocyanaten und Polyphenyl-polymethylen-polyisocyanaten darstellt, wobei vorzugsweise der Anteil an Diphenylmethan-diisocyanaten im Polyisocyanatgemisch 35-75 Gew.-% beträgt,
- der Polyester b) ein mittleres Molekulargewicht von 620 bis 3000 aufweist,
- zur Herstellung des Polyesters b) Hexandiol-1,6 eingesetzt worden ist, und
- daß die Komponenten a) und b) ganz oder teilweise gegebenenfalls erst während der Applikation miteinander umgesetzt worden sind.

Weiterhin bevorzugt ist dabei, daß
- die Verbundmaterialien solche auf Basis von Cellulose- und/oder Lignocellulose-haltigen Materialien darstellen,
- zur Herstellung der Verbundmaterialien zerkleinerte Kunststoffe mitverwendet werden, und
- die mitverwendeten zerkleinerten Kunststoffe solche auf Isocyanat-Basis sind.

In den erfindungsgemäß verwendeten Mischungen liegt in der Regel ein Gewichtsverhältnis der Komponenten a) und b) zwischen 100:1 und 100:200, vorzugsweise zwischen 100:5 und 100:30, vor.

Besonders bevorzugt sind in den erfindungsgemäß verwendeten Mischungen solche Polyester b) enthalten, welche durch Kondensation von Ricinolsäure auf einem C₂-C₂₀-Starterpolyol erhalten werden. Es handelt sich dabei um hydroxyfunktionelle Polyester. Es ist jedoch auch möglich, solche Polyester als Mischungskomponente b) zu verwenden, die durch Selbstkondensation von Ricinolsäure erhalten werden. In diesem Fall weisen die Polyester pro Molekül noch eine Carboxylgruppe auf.

Als C₂-C₂₀-Starterpolyole können die bekannten 2-6-funktionellen Polyole vom Molekulargewicht 62-399 zum Einsatz gelangen. Beispielhaft seien genannt: Ethylenglykol, Propandiol-(1,2) und -(1,3), Butandiol-(1,4) und -(2,3), Hexandiol-(1,6) und -(2,5), 2-Ethylhexandiol, Octadecandiol-1,12, 3-Methylpentandiol-1,5, Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol(1,2,4), Trimethylolethan, Pentaerythrit, Chinit, Mannit und Sorbit, Formit, 1,4,3,6-Dianhydrosorbit, Methylglykosid, ferner Diethylenglykol, Triethylenglykol, Tetraethylglykol und höhere Polyethylenglykole, Dipropylenglykol und höhere Polypropylglykole sowie Dibutylenglykol und höhere Polybutylenglykole.

Bei der Herstellung von Verbundmaterialien (Preßwerkstoffen) durch Heißverpressen unter erfindungsgemäßer Verwendung der Mischungen als Bindemittel können gegebenenfalls auch weitere Zusätze (Zusatzstoffe c)), wie sie nach dem Stand der Technik bekannt sind, z.B. die an sich bekannten Polyetherpolyole vom Molekulargewicht 400-10 000 und/oder Alkylencarbonate (EP-0 352 558), mitverwendet werden.

Mit den erfindungsgemäß verwendeten Mischungen als Bindemittel ist es möglich, Preßwerkstoffe wie Spanplatten, gegebenenfalls nach einmaligem Konditionieren der Form, durch Aufbringen eines Trennbeschichtungsmittels durch Heißverpressen herzustellen, ohne daß ein wiederholtes Eintrennen der Form mit einem äußeren Trennmittel nötig ist. Außerdem wurde wiederholt eine deutliche Preßzeitverkürzung festgestellt.

Die erfindungsgemäß als Bindemittel verwendeten Mischungen können durch Vermischen der Komponenten a) und b) und gegebenenfalls c) bei Temperaturen von 0°-300°C, bevorzugt bei 10°-100°C, gegebenenfalls erst kurz vor oder im Grenzfalls auch während der Applikation, hergestellt werden.

Als Isocyanatkomponente a) der erfindungsgemäß verwendeten Mischungen kommen beliebige, vorzugsweise jedoch bei Raumtemperatur flüssige, aromatische Polyisocyanate in Betracht, wie sie z.B. von W. Siefken in Justus Liebigs Annalen der Chemie, 562, Seiten 75-136, beschrieben werden, beispielsweise solcher Formel

Q(NCO)ₙ,

in der
- n: 2 bis 4, vorzugsweise 2 und 3, und
- Q: einen aromatischen Kohlenwasserstoffrest mit 6 bis 15, vorzugsweise 6 bis 13 C-Atomen,
bedeutet,
z.B. solche aromatischen Polyisocyanate, wie sie in der DE-OS 2 832 253, Seiten 10 bis 11, beschrieben werden.

Besonders bevorzugt werden in der Regel die technisch leicht zugänglichen aromatischen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende aromatische Polyisocyanate ("modifizierte Polyisocyanate"), insbesondere solche modifizierten Polyisocyanate, die sich vom 2,4-und/oder 2,6-Toluylendiisocyanat bzw. vom 4,4'- und/oder 2,4'-Diphenylmethandiisocyanat ableiten.

Geeignete lignocellulosehaltige Rohstoffe, welche mit den erfindungsgemäß verwendeten Mischungen als Bindemittel gebunden werden können, sind beispielsweise Holz, Rinde, Kork, Bagasse, Stroh, Flachs, Bambus, Alfagras, Reisschalen, Sisal- und Kokosfasern. Selbstverständlich können erfindungsgemäß jedoch auch mit anderen organischen (z.B. Kunststoffabfällen aller Art) und/oder anorganischen Rohstoffen (z.B. Blähglimmer oder Silikatkugeln) Verbundmaterialien hergestellt werden. Das Material kann dabei in Form von Granulaten, Spänen, Fasern, Kugeln oder Mehl vorliegen und einen Feuchtigkeitsgehalt von z.B. 0 bis 35 Gew.-% aufweisen.

Es ist auch möglich, die Komponenten der erfindungsgemäß verwendeten Mischungen (Polyisocyanat a) bzw. Polyricinolsäurepolyester b)) getrennt auf das zu bindende Material aufzubringen, wobei die Komponenten gegebenenfalls in einem inerten organischen Lösungsmittel (als Zusatzmittel) gelöst sein können. Bevorzugt ist es jedoch, das Polyisocyanat a) in einem vorausgehenden getrennten Arbeitsschritt mit dem Polyricinolsäurepolyester b), gegebenenfalls unter Mitverwendung von Hydroxylgruppen aufweisenden Polyethern und/oder Alkylencarbonaten und/oder Lösungsmittelns als Zusatzstoffe, ganz oder teilweise miteinander umzusetzen.

Auf 100 Gew.-Teile Isocyanat a) werden dabei in der Regel 1 bis 200 Gew.-Teile, vorzugsweise 5 bis 30 Gew.-Teile an Polyricinolsäurepolyester b) eingesetzt. Die Vereinigung der Komponenten kann z.B. bei 0° bis 300°C, vorzugsweise bei 10° bis 100°C, gegebenenfalls erst kurz vor oder während der Applikation, gegebenenfalls in Anwesenheit eines inerten organischen Lösungsmittels, wie z.B. Kohlenwasserstoff-Fraktionen, erfolgen. Die so erhaltenen, selbsttrennend wirkenden Bindemittel sind lagerstabil und können zu einem beliebigen Zeitpunkt für die erfindungsgemäße Verwendung eingesetzt werden.

Erfindungsgemäß wird das zu bindende organische und/oder anorganische Material mit dem Bindemittel in einer Menge von etwa 0,5 bis 20 Gew.-%, bevorzugt 2 bis 12 Gew.-%, bezogen auf Gesamtmasse des Formkörpers, versetzt, und - im allgemeinen unter Einwirkung von Druck und Hitze (z.B. 70 bis 250°C und 1 bis 150 bar) - zu Platten oder dreidimensional geformten Formkörpern verpreßt.

In analoger Weise können auch mehrlagige Platten oder Formteile aus Furnieren, Papieren oder Geweben hergestellt werden, indem man die Lagen, wie oben beschrieben, mit dem Bindemittel behandelt und anschließend - in der Regel bei erhöhter Temperatur und erhöhtem Druck - verpreßt. Vorzugsweise werden Temperaturen von 100 bis 250°C, besonders bevorzugt 130 bis 200°C, eingehalten. Der Anfangspreßdruck liegt vorzugsweise zwischen 5 und 150 bar, im Laufe des Preßvorganges fällt dann der Druck meist bis gegen 0 ab.

Die erfindungsgemäß verwendeten Mischungen können auch die aus der Polyurethanchemie an sich bekannten Polyhydroxylverbindungen vom Molekulargewicht 400 bis 10000 wie Polyester oder Polyether in einem NCO/OH-Verhältnis zwischen 1,2:1 und 10:1, vorzugsweise 1,5:1 bis 1:1, als Zusatzstoffe c) enthalten. Es ist dabei möglich, die Komponenten a) und b) und c) getrennt oder vorzugsweise als reaktives Gemisch für die Verwendung einzusetzen. Praktische Bedeutung haben derartige Mischungen als Bindemittel z.B. bei der Bindung von Korkschrot. Es ist auch möglich, der Mischung an sich bekannte Treibmittel in einer Menge von ca. 0,5 bis 30 Gew.-%, bezogen auf die Gesamtmischung und/oder andere, die Schaumbildung oder die chemische Reaktion zwischen Polyisocyanaten, lignocellulosehaltigem Material und gegebenenfalls Polyhydroxylverbindungen beeinflussende Additive wie Stabilisatoren, Katalysatoren und Aktivatoren, in einer Menge von 0,05 bis 10 Gew.-%, bezogen auf Binde- bzw. Imprägniermittel, zuzusetzen.

Die erfindungsgemäß als Bindemittel zu verwendenden Mischungen können auch mit den in der Holzwerkstoffindustrie bisher überwiegend eingesetzten wäßrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. auf Basis von Polyvinylacetat- oder anderen Kunststofflatices, Sulfitablauge oder Tannin, wobei in der Regel ein Mischungsverhältnis der erfindungsgemäßen Mischungen mit diesen zusätzlichen Bindemitteln zwischen 1:20 und 20:1, vorzugsweise zwischen 1:5 und 5:1 Gew.-Teilen, eingehalten wird. Dabei kann man die erfindungsgemäß verwendeten Mischungen und die zusätzlichen Bindemittel entweder separat oder auch in Mischung einsetzen.

Besonders vorteilhaft sind derartige Kombinationen bei der Herstellung von mehrschichtigen Platten mit speziellen Eigenschaften. Man kann z.B. die äußeren Schichten mit den erfindungsgemäß zu verwendenden Mischungen (allein oder gemeinsam mit konventionellen Bindemitteln) und eine oder mehrere innere Schichten mit konventionellen Bindemitteln (allein oder gemeinsam mit den erfindungsgemäßen Mischungen) versetzen und anschließend miteinander verpressen.

Infolge ihrer hervorragenden mechanischen Eigenschaften sowie des günstigen Verhaltens bei Feuchtigkeitswechseln eignen sich die erfindungsgemäß hergestellten Platten oder Formteile auf Basis von lignocellulosehaltigen Rohstoffen vor allem für eine Verwendung im Bauwesen. Um den Platten oder Formteilen die hierfür im allgemeinen erforderliche Beständigkeit gegen Pilzbefall, Insektenfraß oder Feuereinwirkung zu verleihen, kann man den Bindemitteln die handelsüblichen organischen oder anorganischen Schutzmittel, in reiner Form oder als Lösung, in einer Menge von ca. 0,05 bis 30 Gew.-%, vorzugsweise 0,5 bis 20 Gew.-%, bezogen auf lignocellulosehaltige Rohstoffe, zusetzen. Als Lösungsmittel kommen z.B. in Frage: Wasser oder organische Lösungsmittel, z.B. Rückstandsöle aus der Erdölaufarbeitung, Chlorkohlenwasserstoffe. Die Verleimungsqualität wird hierdurch im allgemeinen nicht beeinträchtigt. Im Gegensatz zu Phenol/Formaldehyd-Harz-verleimten Platten treten bei den erfindungsgemäß hergestellten Verbundmaterialien dabei vorteilhafterweise weder Salzausblühungen noch "Ausbluten" ein.

Mit den erfindungsgemäß verwendeten Mischungen können im Vergleich zu herkömmlichen Bindemitteln auf Basis von Phenol/Formaldehyd- oder Harnstoff/Formaldehyd-Harzen bei der Spanplattenherstellung wesentliche Verbesserungen, sowohl im Hinblick auf die mechanischen Eigenschaften als auch in verfahrenstechnischer Hinsicht, erzielt werden. So ist es im Falle von Holzspanplatten möglich, entweder bei gleicher Bindemittelmenge wie bei Phenol/Formaldehydbzw. Harnstoff/Formaldehyd-Harzen eine bis zu 50 % erhöhte Biegefestigkeit (neben einer Verbesserung anderer mechanischer Eigenschaften) oder aber bei einer um 25 bis 70 % erniedrigten Bindemittelkonzentration ein gleiches mechanisches Eigenschaftsbild zu erreichen. Diese optimalen Werkstoffeigenschaften werden insbesondere dann erzielt, wenn eine erfindungsgemäß verwendete Mischung auf Basis eines Gemischs von Diphenylmethandiisocyanaten und Polyphenyl-Polymethylen-polyisocyanaten als Bindemittel eingesetzt wird.

Es ist hierbei ohne Einfluß, ob ein solches Polyisocyanatgemisch durch Abdestillieren von 2,4'- und/oder 4,4'-Diisocyanatodiphenylmethan aus rohem Diphenylmethandiisocyanat oder analog durch Abtrennen von reinem Diaminodiphenylmethan aus rohem Diaminodiphenylmethan und anschließende Phosgenierung der so erhaltenen nicht destillierten Bodenfraktion aus Polyarylaminen hergestellt wurde.

Vorzugsweise enthält ein solches Polyisocyanatgemisch zwischen 35 und 75 Gew.-% an Diisocyanatodiphenylmethan.

Die nachfolgenden Beispiele erläutern die Erfindung. Wenn nicht anders vermerkt, sind Zahlenangaben als Gewichtsteile bzw. Gewichtsprozente zu verstehen.

In den Beispielen wurden die folgenden Polyisocyanatkomponenten eingesetzt: (%-Angaben in Gew.-%)
**A 1:**
   Vom rohen Phosgenierungsprodukt eines Anilin/Formaldehyd-Kondensats wird soviel Diisocyanatodiphenylmethan abdestilliert, daß der Destillationsrückstand bei 25°C eine Viskosität von 100 cP aufweist (2-Kernanteil: 59,7 %; 3-Kernanteil: 21,3 %; Anteil an höherkernigen Polyisocyanaten: 19,0 %).
**A 2:**
   Entsprechend hergestelltes Polyisocyanat mit einer Viskosität von 200 cP bei 25°C (2-Kernanteil: 44,3 %; 3-Kernanteil: 23,5 %; Anteil an höherkernigen Polyisocyanaten: 32,2 %).
**A 3:**
   Entsprechend hergestelltes Polyisocyanat mit einer Viskosität von 400 cP bei 25°C (2-Kernanteil: 45,1 %; 3-Kernanteil: 22,3 %; Anteil an höherkernigen Polyisocyanaten: 32,6 %).
**A 4:**
   Entsprechend hergestelltes Polyisocyanat mit einer Viskosität von 300 cP bei 25°C (2-Kernanteil: 56,8 %; 3-Kernanteil: 27,6 %; Anteil an höherkernigen Polyisocyanaten: 15,6 %).
**A 5:**
   Isocyanatgemisch mit einem Gehalt von 80 % 4,4'-, 10 % 2,4'-Diphenylmethandiisocyanat und 10 % höherkerniges Polyisocyanat.
**A 6:**
   Isocyanatgemisch mit einem Gehalt von ca. 45 % 4,4'- und 55 % 2,4'-Diphenylmethandiisocyanat.
**A 7:**
   Reines monomeres 4,4'-Diphenylmethandiisocyanat.
**A 8:**
   Semiprepolymer mit einem NCO-Gehalt von ca. 23 %, welches durch Umsetzen von Isocyanat A 7 mit technischem Tripropylenglykol erhalten wird.
**A 9:**
   Isocyanatgemisch aus ca. 80 % 2,4-Toluylendiisocyanat und 20 % 2,6-Toluylendiisocyanat.
   Die Herstellung von Polyricinolsäurepolyestern erfolgt analog den üblichen Esterkondensationen (s. z.B. EP-180 749) bei erhöhten Temperaturen und gleichzeitiger Wasserabnahme, gegebenenfalls unter Venvendung üblicher Katalysatoren. Folgende Produkte seien beispielhaft genannt:
**B 1:**
   Umsetzungsprodukt aus 1 mol 1,2-Dihydroxyethan und 7 mol Ricinolsäure (z.B. Nouracid® CS 80 der Akzo GmbH);
   Hydroxylzahl ca. 35, Viskosität (25°C): 920 mPa.s.
**B 2:**
   Selbstkondensationsprodukt aus 4 mol Ricinolsäure;
   Hydroxylzahl: ca. 51, Viskosität (25°C): 820 mPa.s.
**B 3:**
   Kondensationsprodukt aus 1 mol Hexandiol-1,6 und 2 mol Ricinolsäure; Hydroxylzahl: 147, Viskosität (25°C): 300 mPa.s.
**B 4:**
   Kondensationsprodukt aus 1 mol Hexandiol-1,6 und 14 mol Ricinolsäure; Hydroxylzahl: ca. 27,7, Viskosität (25°C): 1480 mPa.s.
**B 5:**
   Kondensationsprodukt aus 1 mol Ethylenglykol und 7 mol Ricinolsäure; Hydroxylzahl: ca. 39, Viskosität (25°C): 1000 mPa.s.
**B 6:**
   Kondensationsprodukt aus 1 mol Octadecandiol-1,12 und 7 mol Ricinolsäure; Hydroxylzahl: ca. 28, Viskosität (25°C): 900 mPa.s.
**B 7:**
   Kondensationsprodukt aus 1 mol Diethylenglykol und 6,75 mol Ricinolsäure; Hydroxylzahl: ca. 34, Viskosität (25°C): 920 mPa.s.
**B 8:**
   Umsetzungsprodukt aus 1 mol Trimethylolpropan und 10,5 mol Ricinolsäure; Hydroxylzahl: ca. 44, Viskosität (25°C): 1560 mPa.s.
**B 9:**
   Umsetzungsprodukt aus 1 mol Diethylenglykol und 2 mol Ricinolsäure Hydroxyzahl: 149, Viskosität (25°C): 260 mPas
**B 10:**
   Umsetzungsprodukt aus 1 mol Tetraethylenglykol und 2 mol Ricinolsäure Hydroxyzahl: 139, Viskosität (25°C): 240 mPas.

Zur Herstellung der erfindungsgemäß zu venvendeten Mischungen werden die beispielhaft genannten Ausgangskomponenten A und B in an sich bekannter Art und Weise bei erhöhter Temperatur verrührt. Zur Stabilisierung können saure Zusätze (Zusatzstoffe c), falls erforderlich, mitverwendet werden. Es ist auch möglich, die Komponenten A und B kurz vor oder erst während der Applikation zu vermischen.

Beispielhaft seien folgende Mischungen erwähnt:
**C 1** (erfindungsgemäß):
   881,2 kg Isocyanat A1 werden mit 128,8 kg Polyester B1 2 Stunden bei 80°C umgesetzt.
   NCO-Gehalt: 27,1 %.
   Viskosität (25°C): 350 mPa.s.
**C 2** (erfindungsgemäß):
   Isocyanat Al und Polyester B4 werden kurz vor der Applikation in einem Verhältnis von 6,8:1 vermischt und sofort verarbeitet.
**C 3** (erfindungsgemäß):
   Entsprechend C2 nur mit Polyester B5.
**C 4** (erfindungsgemäß):
   Entsprechend C2 nur mit Polyester B6.
**C 5** (erfindungsgemäß):
   8,47 kg Isocyanat Al werden mit 1,23 kg Polyester B2 2 Stunden bei 80°C vermischt.
   NCO-Gehalt: 26,7 %
   Viskosität: 610 mPa.s.
**C 6** (erfindungsgemäß):
   5 kg Isocyanat Al werden mit 5 kg Polyester B1 2 Stunden bei 80°C vermischt.
   NCO-Gehalt: 14,2 %
   Viskosität (25°C): 3120 mPa.s.
**C 7** (erfindungsgemäß):
   2,25 kg Isocyanat Al werden mit 4,5 kg Polyester Bl 2 Stunden bei 80°C vermischt.
   NCO-Gehalt: 8,2 %
   Viskosität (25°C): 9600 mPa.s.
**C 8** (erfindungsgemäß):
   9 kg Isocyanat A5 werden mit 1 kg Polyester B1 2 Stunden bei 80°C vermischt.
   NCO-Gehalt: 28,7 %
   Viskosität (25°C): 45 mPa.s.
**C 9** (Vergleich):
   4,5 kg Isocanat Al werden mit 0,66 kg Ölsäure 2 Stunden bei 80°C und 1 Stunde bei 100°C verrührt.
   NCO-Gehalt: 26,1 %
   Viskosität (25°C): 560 mPa.s.
**C 10** (Vergleich):
   4,5 kg Isocyanat Al werden mit 0,66 kg Tallöl 2 Stunden bei 80°C und 1 Stunde bei 100°C verrührt.
   NCO-Gehalt: 26,2 %
   Viskosität (25°C): 535 mPa.s.
**C11** (erfindungsgemäß):
   9 kg des Isocyanatgemisches A9 werden mit 1 kg des Polyricinolsäurepolyesters
   B1 bei 80°C verrührt.
   NCO-Gehalt: 42,8 %
   Viskosität (25°C): 6.1 mPa.s

### Anwendungsbeispiele

### Beispiel 1 (erfindungsgemäß)

4060 g industriell hergestellte Deckschicht-Nadelholzspäne mit einem Feuchtigkeitsgehalt von 15 % werden mit 282 g der Produkte gemäß der Tabelle I in einer Laborbeleimungsmaschine vermischt. Aus den beleimten Spänen wird auf einem Stahl-Zulageblech ein Formling gebildet, anschließend mit einem weiteren Stahl-Zulageblech auf der Oberseite versehen und in einer Heißpresse bei der Heizplattentemperatur von 180°C sowie einem Anfangsdruck von 25 bar 1,6 min lang verpreßt.

Man erhält eine Spanplatte, die sich befriedigend von den Zulageblechen lösen läßt und ab der vierten Wiederholung "hervorragende" (d.h. der Entformung wird kein Widerstand entgegengesetzt) Trenneigenschaften aufweist.

### Beispiel 1a (Vergleich)

Alternativ wurde versucht, nach dem oben beschriebenen Verfahren eine Spanplatte mit einem nicht modifizierten Isocyanat (PMDI) herzustellen. Im Gegensatz zum Beispiel 1 hafteten die Zulagebleche so stark an der Spanplatte, daß die Zulagebleche nicht ohne Zerstörung der Spanplatten entfernt werden konnten. (Tabelle 1, Versuchs-Nr. 5)

### Beispiel 1b (Vergleich)

Analog Vergleichsbeispiel la wurden in der Patentliteratur beschriebene Produkte mit "Trenneigenschaften" überprüft (Tabelle 1, Versuchs-Nr. 6 und 7). Ergebnisse wie in Beispiel 1a.

### Beispiel 2 (erfindungsgemäß)

2990 g labormäßig hergestellte Weizenstrohspäne mit einem Feuchtigkeitsgehalt von 15 % werden mit 208 g des Produktes 1 gemäß Tabelle I analog Beispiel 1 verarbeitet.

Man erhält eine Strohspanplatte, die sich analog Beispiel 1 anfangs befriedigend, ab der vierten Wiederholung hervorragend entformen läßt.

### Beispiel 3 (erfindungsgemäß)

Werden die Stahl-Zulagebleche vor Versuchsbeginn mit einem ausgehärteten Trennfilm durch Aufbringen eines Formbeschichtungsmittels versehen und analog den Beispielen 1 und 2 eingesetzt, so ergibt sich von Beginn an ein hervorragendes Entformungsverhalten.

Auch nach Erschöpfung des Trennfilms bleibt der Einsatz der erfindungsgemäßen Produkte das hervorragende Entformungsverhalten bestehen.

### Beispiel 4 (erfindungsgemäß)

Einsatz von Aluminium-Zulageblechen anstelle von Stahl analog den Beispielen 1, la, 2 und 3 mit gleichen Ergebnissen.

### Beispiel 5

Aus industriell hergestellten Deck- und Mittelschichtspänen werden dreischichtige 16 mm-Holzspanplatten hergestellt, wobei als Bindemittel das erfindungsgemäße Produkt Cl (Tabelle I) und als Vergleich ein nicht modifiziertes Isocyanat (PMDI) in Verbindung mit einem Formbeschichtungsmittel aus Trennhilfe eingesetzt werden. Die resultierenden Spanplatten werden gemäß DIN 68 763 auf ihre Platteneigenschaften hin überprüft. Die Platte, gebunden mit dem Produkt 1, ergibt mechanische Eigenschaften, die der Vergleichsplatte völlig äquivalent sind (Tabelle II).

### Beispiel 6

Analog Beispiel 5, wobei anstelle von Holzspänen labormäßig hergestellte Weizenstrohdeck- und Mittelschichtspäne eingesetzt werden (Tabelle II).

**Tabelle I**

| Nr. | Produkt | Trennverhalten |
|---|---|---|
| 1 | C 1 | befriedigende Entformbarkeit bei den ersten drei Versuchspressungen, ab der vierten Wiederholung hervorragende Entformbarkeit |
| 2 | C 2 | |
| 3 | C 3 | |
| 4- | C 4 | |
| 5 | nicht mod. PMDI A1 | sehr starke Haftung; Zulagebleche nicht ohne Zerstörung der Spanplatte lösbar |
| 6 | C 9 | |
| 7 | C 10 | |

**Tabelle II**

| | Bindemittel | Bindemitteldosierung % a.a. ∗) | Preßtemp. °C | Preßzeit min | Querzugfestigkeit MPa Plattenrohdichte ca. 620 kg/m³ | |
|---|---|---|---|---|---|---|
| | | | | | V 20 | V100 |
| Holzspäne | C 1 | 5 | 180 | 2,4 | 0,76 | 0,16 |
| Holzspäne | nicht mod. PMDI A 1 | 5 | 180 | 2,4 | 0,74 | 0,16 |
| | | | | | | |
| Weizenstrohspäne | C 1 | 5 | 180 | 6,5 | 0,36 | 0,06 |
| Weizenstrohspäne | nicht mod. PMDI A 1 | 5 | 180 | 6,5 | 0,30 | 0,05 |

| | | | | | | |
|---|---|---|---|---|---|---|
| ∗) % a.a. = Gew.-% (rechnerisch bezogen auf absolut trockene Späne) | | | | | | |

## Patentansprüche

1. Verwendung einer Mischung, enthaltend
a) ein aromatisches Polyisocyanat,
b) einen Polyester mit einem mittleren Molekulargewicht von 600 bis 5000, erhältlich durch Selbstkondensation von Ricinolsäure, gegebenenfalls unter Mitvenvendung eines C₂-C₂₀-Starterpolyols, und gegebenenfalls
c) Zusatzstoffe,
gegebenenfalls in Kombination mit an sich bekannten Polyhydroxylverbindungen vom Molekulargewicht 400 bis 10000, als Bindemittel zur Herstellung von Verbundmaterialien.

2. Verwendung gemäß Anspruch 1, dadurch gekennzeichnet, daß das Polyisocyanat a) ein Polyisocyanat auf Basis von Diphenylmethan-diisocyanat ist.

3. Verwendung gemäß Anspruch 1 und 2, dadurch gekennzeichnet, daß das Polyisocyanat a) ein Gemisch von Diphenylmethan-diisocyanaten und Polyphenyl-polymethylen-polyisocyanaten darstellt.

4. Verwendung gemäß Anspruch 1 bis 3, dadurch gekennzeichnet, daß der Polyester b) ein mittleres Molekulargewicht von 620 bis 3000 aufweist.

5. Verwendung gemäß Anspruch 1 bis 4, dadurch gekennzeichnet, daß zur Herstellung des Polyesters b) Hexandiol-1,6 eingesetzt wird.

6. Verwendung gemäß Anspruch 1 bis 5, dadurch gekennzeichnet, daß die Komponenten a) und b) ganz oder teilweise, gegebenenfalls erst während der Applikation, miteinander umgesetzt worden sind.

7. Verwendung gemäß Anspruch 1 bis 6, dadurch gekennzeichnet, daß die Verbundmaterialien solche auf Basis von Cellulose- und/oder Lignocellulose-haltigen Materialien darstellen.

8. Venvendung gemäß Anspruch 1 bis 7, dadurch gekennzeichnet, daß zur Herstellung der Verbundmaterialien zerkleinerte Kunststoffe mitverwendet werden.

9. Verwendung gemäß Anspruch 8, dadurch gekennzeichnet, daß die mitverwendeten zerkleinerten Kunststoffe solche auf Isocyanat-Basis sind.

## Claims

1. Use of a mixture, containing
a) an aromatic polyisocyanate,
b) a polyester with an average molecular weight of 600 to 5000, obtainable by self-condensation of ricinoleic acid, optionally with co-utilization of a C₂-C₂₀ starter polyol, and optionally
c) additives,
optionally in combination with per se known polyhydroxylic compounds of molecular weight 400 to 10,000, as binder for the production of composite materials.

2. Use according to Claim 1, characterized in that the polyisocyanate a) is a polyisocyanate based on diphenylmethane diisocyanate.

3. Use according to Claims 1 and 2, characterized in that the polyisocyanate a) is a mixture of diphenylmethane diisocyanates and polyphenyl-polymethylene polyisocyanates.

4. Use according to Claims 1 to 3, characterized in that the polyester b) has an average molecular weight of 620 to 3000.

5. Use according to Claims 1 to 4, characterized in that 1,6-hexanediol is used for the production of the polyester b).

6. Use according to Claims 1 to 5, characterized in that the components a) and b) have been caused to react together completely or partially, optionally not until during the application.

7. Use according to Claims 1 to 6, characterized in that the composite materials are ones based on materials containing cellulose and/or lignocellulose.

8. Use according to Claims 1 to 7, characterized in that ground plastics are co-utilized for the production of the composite materials.

9. Use according to Claim 8, characterized in that the co-utilized ground plastics are isocyanate-based.

## Revendications

1. Utilisation d'un mélange contenant
a) un polyisocyanate aromatique,
b) un polyester au poids moléculaire moyen de 600 à 5 000 obtenu par auto-condensation de l'acide ricinoléique, le cas échéant avec utilisation conjointe d'un polyol de départ en C₂-C₂₀, et le cas échéant
c) des additifs,
éventuellement en combinaison avec des composés polyhydroxylés connus en soi de poids moléculaire 400 à 10 000, en tant que liant pour la fabrication de matériaux composites.

2. Utilisation selon revendication 1, caractérisée en ce que le polyisocyanate a) est à base de diphénylméthanediisocyanate.

3. Utilisation selon les revendications 1 et 2, caractérisée en ce que le polyisocyanate a) est un mélange de diphénylméthanediisocyanate et de polyphénylpolyméthylènepolyisocyanates.

4. Utilisation selon les revendications 1 à 3, caractérisée en ce que le polyester b) a un poids moléculaire moyen de 620 à 3 000.

5. Utilisation selon les revendications 1 à 4, caractérisée en ce que, pour la préparation du polyester b), on a utilisé l'hexanediol-1,6.

6. Utilisation selon les revendications 1 à 5, caractérisée en ce que, le cas échéant, on ne met à réagir les composants a) et b) entre eux, en totalité ou en partie, que durant l'application.

7. Utilisation selon les revendications 1 à 6, caractérisée en ce que les matériaux composites sont à base de matières contenant de la cellulose et/ou de la lignocellulose.

8. Utilisation selon les revendications 1 à 7, caractérisée en ce que, à la fabrication des matériaux composites, on utilise conjointement des résines synthétiques broyées.

9. Utilisation selon revendication 8, caractérisée en ce que les résines synthétiques broyées qu'on utilise conjointement sont à base d'isocyanates.
